# EUROPEAN PATENT SPECIFICATION

(11) **EP 3 996 170 B1**
(45) Date of publication and mention of the grant of the patent: **11.10.2023**
(21) Application number: 21761351.2
(22) Date of filing: 25.02.2021
(51) Int. Cl.: H01M 4/1395, H01M 4/04, H01M 4/134, H01M 4/38, H01M 10/052, H01M 4/62, H01M 4/58

(54) **METHOD FOR MANUFACTURING LITHIUM METAL NEGATIVE ELECTRODE, LITHIUM METAL NEGATIVE ELECTRODE MANUFACTURED THEREBY, AND LITHIUM-SULFUR BATTERY COMPRISING SAME**
VERFAHREN ZUR HERSTELLUNG EINER NEGATIVEN LITHIUM-METALL-ELEKTRODE, DADURCH HERGESTELLTE NEGATIVE LITHIUM-METALL-ELEKTRODE UND LITHIUM-SCHWEFEL-BATTERIE DAMIT
PROCÉDÉ DE FABRICATION D'UNE ÉLECTRODE NÉGATIVE MÉTALLIQUE AU LITHIUM, ÉLECTRODE NÉGATIVE MÉTALLIQUE AU LITHIUM AINSI FABRIQUÉE ET BATTERIE SECONDAIRE AU LITHIUM-SOUFRE COMPRENANT CETTE DERNIÈRE

(30) Priority: 27.02.2020 KR 20200024005; 23.02.2021 KR 20210024094
(43) Date of publication of application: 11.05.2022
(73) Proprietor: LG Energy Solution, Ltd., Seoul 07335 (KR)
(72) Inventor: JUNG, Unho, Daejeon 34122 (KR); LEE, Jaegil, Daejeon 34122 (KR)
(74) Representative: Hoffmann Eitle
(86) International application number: PCT/KR2021/002345
(87) International publication number: WO 2021/172879

(56) References cited:
- EP-A1- 3 174 153
- EP-A1- 3 179 539
- EP-A2- 3 579 310
- WO-A1-2014/142953
- WO-A1-2021/144312
- JP-A- 2004 165 097
- JP-B2- 6 112 111
- KR-A- 20180 096 983
- KR-A- 20180 114 276
- US-A1- 2013 095 380

## Description

### [Technical Field]

This application claims the benefits of Korean Patent Application No. 10-2020-0024005 on February 27, 2020 with the Korean Intellectual Property Office, and Korean Patent Application No. 10-2021-0024094 on February 23, 2021 with the Korean Intellectual Property Office.

The present invention relates to a method of manufacturing a lithium metal negative electrode, a lithium metal negative electrode manufactured thereby, and a lithium-sulfur battery comprising the same.

### [Background Art]

As the application range of lithium secondary batteries extends to not only portable electronic devices, but also electric vehicles (EV) and electric storage systems (ESS), demand for lithium secondary batteries with high capacity, high energy density, and long lifetime is increasing.

Among various lithium secondary batteries, a lithium-sulfur battery is a battery system that uses a sulfur-based material containing a sulfur-sulfur bond as a positive electrode active material, and uses lithium metal, a carbonbased material capable of intercalating/deintercalating lithium ions, or silicon, tin or the like, which forms an alloy with lithium, as a negative electrode active material.

In the lithium-sulfur battery, there is an advantage that sulfur, which is the main material of the positive electrode active material, has a low atomic weight, is very rich in resources and thus easy to supply and receive, and is cheap, non-toxic, and environmentally friendly.

In addition, the lithium-sulfur battery has a theoretical specific capacity of 1,675 mAh/g from the conversion reaction of lithium ions and sulfur (S₈+16Li⁺+16e⁻ → 8Li₂S) in the positive electrode, and when lithium metal is used as the negative electrode, the theoretical energy density of 2,600 Wh/kg is shown. Since the theoretical energy density of the lithium-sulfur battery is much higher than the theoretical energy density of other battery systems (Ni-MH battery: 450 Wh/kg, Li-FeS battery: 480 Wh/kg, Li-MnO₂ battery: 1,000 Wh/kg, Na-S battery: 800 Wh/kg) and lithium ion battery (250 Wh/kg) currently under study, the lithium-sulfur battery is attracting attention as a high-capacity, eco-friendly, and inexpensive lithium secondary battery among the secondary batteries developed so far.

In addition, in the case of a lithium-sulfur battery, when lithium metal is used as the negative electrode active material, since the theoretical specific capacity is very high as 3,860 mAh/g, and the standard reduction potential (Standard Hydrogen Electrode; SHE) is also very low as - 3.045 V, it is possible to realize a battery with high capacity and high energy density, so several studies are being conducted as a next-generation battery system.

However, as lithium metal, which is a negative electrode active material, reacts easily with the electrolyte due to its high chemical/electrochemical reactivity, a solid electrolyte interface layer (SEI layer), which is a kind of passivation layer, is formed on the surface of the negative electrode. Since the solid electrolyte interface layer formed in this way can secure a certain level of stability for the negative electrode active material comprising lithium metal by suppressing the direct reaction between the electrolyte and lithium metal, it is attempted to form this solid electrolyte interface layer stably and uniformly on the surface of lithium metal in the prior art.

However, in the case of a lithium-sulfur battery, when the negative electrode active material is lithium metal, even if the solid electrolyte interface layer is formed as described above, since the electrochemical reaction of the battery continuously occurs on the surface of lithium metal, it is difficult to keep the solid electrolyte interface layer constant. In addition, since the solid electrolyte interface layer formed by the reaction between the electrolyte and lithium metal is weak in mechanical strength, as the charging/discharging of the battery proceeds, the structure collapses, causing a local difference in current density, thereby forming lithium dendrite on the surface of lithium metal. In addition, the lithium dendrite formed in this way causes an internal short circuit and inert lithium (dead lithium) of the battery, thereby causing problems of increasing the physical and chemical instability of the lithium secondary battery, as well as reducing the battery capacity and reducing the cycle lifetime.

Due to the high instability of lithium metal and the problem of generating lithium dendrite as described above, the lithium-sulfur battery using lithium metal as a negative electrode has not been commercially available.

Accordingly, various methods such as a method of introducing a protective layer on the surface of lithium metal or a method of varying the composition of an electrolyte are being studied.

As an example, Korean Patent Publication No. 2016-0034183 discloses that the loss of the electrolyte and the generation of dendrites can be prevented by forming a protective layer as a polymer matrix capable of accumulating the electrolyte while protecting the negative electrode on the negative electrode active layer containing lithium metal or lithium alloy.

In addition, Korean Patent Publication No. 2016-0052351 discloses that the stability and lifetime characteristics of the lithium secondary battery can be improved by incorporating an absorbent material for lithium dendrite into the polymer protective film formed on the surface of lithium metal and thus suppressing the growth of lithium dendrite.

In addition European applications EP 3 179 539 A1 and EP 3 579 310 A2 disclose the formation by reactive sputtering of a lithium nitride buffer layer on a lithium metal negative electrode.

In addition, Jiangfeng Qian et *al.* and Korean Patent Publication No. 2013-0079126 disclose that the characteristics of a battery comprising lithium metal can be improved by increasing the concentration of each lithium salt or by incorporating a non-aqueous organic solvent comprising 1,3,5-trioxane, 1,3-dioxolane, and fluorine-based cyclic carbonate.

These prior arts suppressed the reaction between the electrolyte and lithium metal or the formation of lithium dendrite to some extent, but the effect was not sufficient. Also, there is a problem of degeneration such as hardening or expansion of the protective layer as the charging/discharging of the battery proceeds. In addition, when an electrolyte including a specific composition is used, there are limitations in applicable batteries and may cause a problem of deteriorating performance of the battery. Therefore, there is a need to develop a lithium metal negative electrode that can be manufactured through a simple process while solving the reactivity problem of lithium metal.

### [Prior art document]

### [Patent document]

Korean Patent Publication No. 2016-0034183 (March 29, 2016), NEGATIVE ELECTRODE FOR RECHARGEABLE LITHIUM BATTERY AND RECHARGEABLE LITHIUM BATTERY COMPRISING SAME
Korean Patent Publication No. 2016-0052351 (May 12, 2016), LITHIUM METAL ELECTRODE FOR LITHIUM SECONDARY BATTERY WITH SAFE PROTECTIVE LAYER AND LITHIUM SECONDARY BATTERY COMPRISING THE SAME
Korean Patent Publication No. 2013-0079126 (July 10, 2013), ELECTROLYTE FOR LITHIUM METAL BATTERY AND LITHIUM METAL BATTERY INCLUDING THE SAME

European Patent Application No. 3 179 539 A1 (June 14, 2017),MULTILAYER STRUCTURED LITHIUM METAL ELECTRODE AND METHOD FOR MANUFACTURING SAME

European Patent Application No. 3 579 310 A2 (December 11, 2019), ANODE FOR LITHIUM SECONDARY BATTERY, PRODUCTION METHOD THEREFOR, AND LITHIUM SECONDARY BATTERY COMPRISING SAME

### [Non-patent document]

Jiangfeng Qian et al., High rate and stable cycling of lithium metal anode, Nature Communications 2015, 6, 6362

### [Disclosure]

### [Technical Problem]

As a result of conducting various studies to solve the above problems, the inventors of the present invention have confirmed that when fixing lithium nitride powder to the surface of lithium metal through rolling to form a lithium nitride protective layer in the form of a powder bed of lithium nitride particles, the growth of lithium dendrite is suppressed and the lithium ionicity is improved, thereby improving the capacity and lifetime of a lithium-sulfur battery, and thus have completed the present invention.

Accordingly, it is an object of the present invention to provide a method of manufacturing a lithium metal negative electrode capable of forming a lithium nitride protective layer in the form of a powder bed of lithium nitride particles having excellent properties on a lithium metal.

In addition, it is another object of the present invention to provide a lithium metal negative electrode manufactured according to the above manufacturing method and a lithium-sulfur battery comprising the same.

### [Technical Solution]

In order to achieve the above objects, the present invention provides a method of manufacturing a lithium metal negative electrode, comprising the steps of,
(a) applying lithium nitride powder on at least one surface of a lithium metal layer; and
(b) rolling the applied powder to form a lithium nitride protective layer in the form of a powder bed of lithium nitride particles on the at least one surface of the lithium metal layer.

The lithium nitride powder comprises lithium nitride particles having an average particle diameter (D₅₀) of 0.1 to 100 *µ*m.

The applying step may be performed through sprinkling.

The rolling step may be performed by placing the lithium metal layer coated with lithium nitride powder between rolling plates, applying heat or pressure during rolling, and removing the rolling plates.

The rolling step may be performed at a temperature ranging from room temperature (25 °C) to 120 °C.

The rolling step may be performed at a pressure ranging from 0.1 to 980 kN.

In addition, the present invention provides a lithium metal negative electrode comprising a lithium metal layer manufactured by the above manufacturing method; and a lithium nitride protective layer in the form of a powder bed of lithium nitride particles fixed without a binder by rolling lithium nitride powder on at least one surface of the lithium metal layer.

The lithium nitride protective layer of the powder bed may have a thickness of 0.1 to 100 *µ*m.

The lithium metal negative electrode may have a surface resistance of 10 to 500 Ω.

The lithium nitride protective layer in the form of a powder bed of lithium nitride particles may have a lithium ion conductivity of 0.0001 to 0.005 S/cm.

In addition, the present invention provides a lithium-sulfur battery comprising the lithium metal negative electrode.

### [Advantageous Effects]

The method of manufacturing a lithium metal negative electrode according to the present invention suppresses the formation of lithium dendrite by forming a lithium nitride protective layer in the form of a powder bed of lithium nitride particles on the surface of lithium metal, and improves the lithium ion conductivity of the negative electrode, thereby enabling high capacity and long lifetime of a lithium-sulfur battery comprising the same.

### [Description of Drawings]

FIG. 1 is a photograph showing the surfaces of lithium metal negative electrodes according to Example 1 and Comparative Example 1 ((a): Comparative Example 1, (b) : Example 1).
FIG. 2 is a graph showing evaluation results of lifetime characteristics of lithium-sulfur batteries according to Example 2 and Comparative Example 2.
FIG. 3 is a graph showing evaluation results of capacity characteristics of a lithium-sulfur battery according to Example 2.
FIG. 4 is a graph showing evaluation results of capacity characteristics of a lithium-sulfur battery according to Comparative Example 2.

### [Best Mode]

Hereinafter, the present invention will be described in more detail.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

The terminology used herein is for the purpose of describing particular embodiments only and is not intended to be limiting of the invention. The singular forms "a," "an," and "the" comprise plural referents unless the context clearly dictates otherwise. It is to be understood that the terms such as "comprise" or "have" as used in the present specification, are intended to designate the presence of stated features, numbers, steps, operations, components, parts or combinations thereof, but not to preclude the possibility of the presence or addition of one or more other features, numbers, steps, operations, components, parts, or combinations thereof.

The term "composite" as used herein refers to a material that two or more materials are combined to express a more effective function while forming physically and chemically different phases to each other.

The term "polysulfide" as used herein is a concept comprising both "polysulfide ion (Sₓ²⁻, x = 1~8)" and "lithium polysulfide (Li₂Sₓ or LiSₓ⁻, x = 1~8)".

The Lithium secondary battery, which has remained in the market limited for use in portable electronic devices, is rapidly expanding into the market of electric vehicles (EV) or energy storage systems, and thus, in accordance to their trend of light weight short and small, weight reduction and miniaturization are also required for the lithium secondary battery, which is their operating energy sources.

Among several secondary batteries, the lithium-sulfur battery exhibits high theoretical discharging capacity and theoretical energy density, and also lithium metal, which is mainly used as a negative electrode active material, has a very small atomic weight (6.94 g/a.u.) and density (0.534 g/cm³), and thus the lithium-sulfur battery is in the spotlight as a next-generation battery due to its ease of miniaturization and weight reduction.

However, as described above, lithium metal has high reactivity. Accordingly, when the electrolyte and lithium metal come into contact, a passivation layer called a solid electrolyte interface layer is formed on the surface of lithium metal due to spontaneous decomposition of the electrolyte. The formation of such a solid electrolyte interface layer reduces the initial efficiency and capacity of the battery due to an irreversible lithium consumption reaction. In addition, as the solid electrolyte interface layer easily collapses during continuous charging/discharging, the current density on the surface of lithium metal becomes non-uniform to form lithium dendrite and inert lithium, thereby deteriorating the overall performance of the lithium-sulfur battery. In addition, in the case of a lithium-sulfur battery using a sulfur-based material as a positive electrode active material, lithium polysulfide (Li₂Sₓ, usually x > 4), which has the high oxidation number of sulfur, among lithium polysulfide (Li₂Sₓ, x = 1-8) formed in the positive electrode during the operation of the battery, has a high solubility in the electrolyte and thus is continuously dissolved therein and released outside the reaction zone of the positive electrode, thereby moving to the negative electrode. At this time, lithium polysulfide leached from the positive electrode causes a side reaction with lithium metal, thereby causing lithium sulfide to adhere to the surface of lithium metal and thus causing passivation of the electrode, and the utilization rate of sulfur is lowered due to the leaching of lithium polysulfide, so that only up to 70% of the theoretical discharging capacity can be realized, and as the cycle progresses, there is a problem that the deterioration of capacity and lifetime is accelerated.

To this end, methods such as introduction of a protective layer on the surface of the lithium metal negative electrode, change of the composition of the electrolyte solvent, and the use of additives in the electrolyte are used in the prior art. However, the problem of generating lithium dendrite in the lithium metal negative electrode has not been effectively improved, and it is unsuitable for commercial use because it causes serious problems in the performance and operating stability of the battery due to compatibility problems with other elements constituting the battery.

Accordingly, in order to suppress the formation of lithium dendrite in a lithium metal negative electrode and thus to secure an effect of improving the capacity and lifetime characteristics of a lithium-sulfur battery including the same, the present invention provides a method of manufacturing a lithium metal negative electrode, which uniformly forms a lithium nitride protective layer in the form of a powder bed on lithium metal by a process of directly applying lithium nitride (Li₃N) powder to the surface of lithium metal, which is a negative electrode active material.

The method of manufacturing the lithium metal negative electrode according to the present invention comprises the steps of,
(a) applying lithium nitride powder on at least one surface of a lithium metal layer; and
(b) rolling the applied powder to form a lithium nitride protective layer in the form of a powder bed of lithium nitride particles on at least one surface of the lithium metal layer including lithium metal.

In the case of the present invention, by using lithium nitride powder, a lithium nitride protective layer in the form of a powder bed containing lithium nitride in the form of particles can be formed on the surface of lithium metal. In the prior art, when forming a lithium nitride protective layer on the surface of lithium metal, a method of applying a coating composition containing a polymer that acts as a binder or a chemical bonding method of reacting a lithium nitride precursor and lithium metal was used. In the case of incorporating a polymeric material binder into the lithium nitride protective layer, a protective layer can be stably formed on the surface of the lithium metal, but when operating the battery, there is a problem of deteriorating the performance of the battery due to the resistance action of the polymer included in the protective layer. In addition, in the case of forming a lithium nitride protective layer through a lithium nitride precursor, it is excellent in terms of thickness and loading amount, but since several steps are required, reaction efficiency, economical efficiency, and productivity may be degraded. In comparison, in the present invention, since lithium nitride powder is applied directly to the surface of lithium metal and rolled to form a physical bond between lithium nitride powder and lithium metal, the lithium nitride protective layer in the form of a powder bed of lithium nitride particles is uniformly formed, and the bonding force with lithium metal is also very good. The lithium nitride protective layer in the form of a powder bed of lithium nitride particles thus formed can effectively suppress the formation of lithium dendrite while improving the stability of the lithium metal negative electrode and can improve the capacity and lifetime characteristics of a lithium-sulfur battery comprising the same. In addition, since lithium nitride in the form of particles exhibits lithium ion conductivity, the effect of improving the capacity characteristics of the lithium-sulfur battery comprising the lithium metal electrode according to the present invention is achieved. In addition, the method of manufacturing the lithium metal negative electrode according to the present invention has the advantage that the process is very simple and easy to apply.

Hereinafter, the present invention will be described in more detail for each step.

First, step (a) is a step of applying lithium nitride powder on at least one surface of a lithium metal layer.

The lithium nitride powder may have an average particle diameter (D₅₀) of 0.1 to 100 *µ*m. In the present invention, the term "D₅₀" is an index for defining particle diameter distribution, and the particle diameter distribution is generally referred to as a particle size distribution. In the particle diameter distribution, D₅₀ is defined as the particle diameter at the point where the cumulative volume from the small particle side reaches 50%, that is, the cumulative frequency of the volume distribution reaches 50%. The average particle diameter of the lithium nitride powder described above may have a lower limit of 0.1 *µ*m or more, 1 *µ*m or more, or 10 *µ*m or more, and an upper limit of 1 *µ*m or less, 10 *µ*m or less, or 100 *µ*m or less. The average particle diameter of the lithium nitride powder may be set by a combination of the lower limit and the upper limit. When the average particle diameter of the lithium nitride powder is less than the above range, the passage through which the lithium ions or electrolyte pass through the surface of the lithium metal layer is blocked, resulting in an overpotential, and thus the desired effect cannot be obtained. On the contrary, when the average particle diameter of the lithium nitride powder exceeds the above range, as the thickness of the lithium nitride protective layer increases and the passages of lithium ions increases, loss of energy density or shortening of the lifespan of the battery may occur.

The lithium metal layer may comprise a thin film of lithium metal or lithium metal powder.

The applying step may be performed by a generally known method, for example, a sprinkling method.

In one embodiment of the present invention, the applying step may be performed through a method of sprinkling lithium nitride powder.

Subsequently, step (b) is a step of forming a lithium nitride protective layer in the form of a powder bed of lithium nitride particles on at least one surface of the lithium metal layer by rolling the powder applied in step (a) described above.

The rolling step in step (b) includes a step of forming a lithium nitride protective layer in the form of a powder bed of lithium nitride particles on at least one surface of the lithium metal layer by applying heat, pressure, or a combination thereof to attach or fuse lithium nitride powder in the form of particles to the surface of lithium metal and thus fix it without a binder.

In the rolling step of step (b), heating may be performed at room temperature (25 °C) to 120°C, preferably 80 to 120 °C for 1 to 60 minutes. During the heating, the temperature and time may vary depending on process conditions. When the heating temperature is less than the above range, sufficient rolling is not performed, and thus it is impossible to form the desired lithium nitride protective layer of the powder bed. On the contrary, when the heating temperature exceeds the above range, lithium metal may melt.

The pressurization in the rolling step of step (b) may be performed using a laminator, a roll press or the like. The pressurization may be performed for 1 to 60 minutes under a pressure range of 0.1 to 980 kN, preferably 0.1 to 100 kN. The pressure and time during the pressurization may vary depending on materials or process conditions.

In the rolling step of step (b), when heat and pressure are simultaneously applied, it may be performed using a hot roll press or the like.

According to one embodiment of the present invention, when lithium nitride powder is applied through sprinkling in step (a), the rolling step may be performed by placing the lithium metal layer coated with the lithium nitride powder between rolling plates and heating or pressing using a hot roll press device. At this time, it is preferable that the rolling plates comprise a chemically inert material. For example, the rolling plates may be a polymer film such as polyethylene, polyethylene terephthalate, or polypropylene, or a metal plate such as copper or a copper alloy. The rolling plates are removed after the rolling process.

By sequentially performing the steps (a) and (b) described above, one lithium nitride protective layer in the form of a powder bed of lithium nitride particles is formed. After first forming a lithium nitride protective layer in the form of a powder bed of lithium nitride particles, that is, in the state that a lithium nitride protective layer in the form of a powder bed of lithium nitride particles has already been formed on lithium metal, steps (a) and (b) are performed again to form a lithium nitride protective layer in the form of a powder bed of lithium nitride particles secondarily. As described above, by repeatedly performing steps (a) and (b), lithium nitride protective layers in the form of a powder bed of lithium nitride particles are stacked to form a lithium nitride protective layer in the form of a powder bed of lithium nitride particles having a multilayer structure. That is, the thickness and lamination structure of the lithium nitride protective layer can be easily controlled by repeating the process.

As described above, the method of manufacturing the lithium metal negative electrode according to the present invention can easily manufacture a lithium metal negative electrode including a lithium nitride protective layer of a uniform powder bed by applying and rolling lithium nitride powder on the surface of lithium metal to fix it without a binder. The lithium nitride protective layer prepared from the manufacturing method of the present invention has excellent uniformity, thereby improving the stability of lithium metal, and also is effective in improving the capacity characteristics by comprising the powder bed in the form of particles and thus by having a certain level of lithium ion conductivity. Therefore, it is possible to improve the performance of the lithium-sulfur battery.

In addition, the present invention provides a lithium metal negative electrode manufactured by the above manufacturing method.

The lithium metal negative electrode comprises a lithium metal layer; and a lithium nitride protective layer in the form of a powder bed of lithium nitride particles formed on at least one surface of the lithium metal layer.

The lithium metal layer may comprise a thin film of lithium metal or lithium metal powder or be a thin film of lithium metal formed on at least one surface of the negative electrode current collector.

The negative electrode current collector is for supporting the negative electrode active material layer, and is not particularly limited as long as it has high conductivity without causing chemical changes in the battery. For example, copper, stainless steel, aluminum, nickel, titanium, palladium, sintered carbon; copper or stainless steel whose surface is treated with carbon, nickel, silver or the like; aluminum-cadmium alloy or the like can be used.

The negative electrode current collector can strengthen the bonding force with the thin film of lithium metal, which is a negative electrode active material, by forming fine irregularities on its surface, and various forms such as films, sheets, foils, meshes, nets, porous bodies, foams, and nonwoven fabrics may be used.

The method of forming the thin film of lithium metal is not particularly limited, and a method of forming a layer or film commonly used in the art may be used. For example, a method such as compression method, coating method, or evaporation method may be used.

The lithium nitride protective layer is formed according to the manufacturing method described above, and may have a thickness in the range of 0.1 to 100 *µ*m. The thickness of the lithium nitride protective layer of the powder bed may have a lower limit of 0.1 *µ*m or more, 1 *µ*m or more, or 10 *µ*m or more, and an upper limit of 1 *µ*m or less, 10 *µ*m or less, or 100 *µ*m or less. The thickness of the lithium nitride protective layer may be set by a combination of the lower limit and the upper limit. When the thickness of the lithium nitride protective layer is less than the above range, there is a concern that the intended function as a protective layer may not be performed. On the contrary, when the thickness exceeds the above range, the lithium ion conductivity may be lowered, thereby causing problems in the operation of the battery.

A lithium ion conductivity of the lithium nitride protective layer of the powder bed may range from 0.0001 to 0.005 S/cm, preferably from 0.001 to 0.002 S/cm. The lithium metal electrode according to the present invention comprises a protective layer containing lithium nitride particles in the form of a powder bed and thus may exhibit superior lithium ion conduction characteristics compared to a lithium metal electrode comprising a conventional lithium nitride protective layer.

In addition, a surface resistance in the electrolyte of the lithium metal negative electrode on which the lithium nitride protective layer is formed is 10 to 500 Ω, preferably 50 to 300 Ω, more preferably 100 to 250 Ω and is not changed for 1 to 240 hours, preferably 24 to 120 hours, and preferably 36 to 48 hours. This means that, unlike the conventional one, continuous electrochemical reaction of the battery on the surface of the lithium metal is prevented, and that the lithium nitride protective layer according to the invention does not react with the electrolyte and is maintained in a stable state.

In addition, the present invention provides a lithium-sulfur battery comprising the lithium metal negative electrode.

The lithium-sulfur battery comprises a positive electrode; a negative electrode; and an electrolyte interposed therebetween, wherein the negative electrode is the lithium metal negative electrode according to the present invention.

The positive electrode may comprise a positive electrode current collector and a positive electrode active material layer applied on one or both surfaces of the positive electrode current collector.

The positive electrode current collector is for supporting the positive electrode active material, and is as described in the negative electrode current collector.

The positive electrode active material layer may comprise a positive electrode active material and may further comprise a conductive material, a binder, an additive, and the like.

The positive electrode active material comprises sulfur, and specifically may comprise at least one selected from the group consisting of elemental sulfur (S₈) and a sulfur compound. The positive electrode active material may be at least one selected from the group consisting of inorganic sulfur, Li₂Sₙ(n≥1), a disulfide compound, an organic sulfur compound, and a carbon-sulfur polymer ((C₂Sₓ)ₙ: x=2.5 to 50, n≥2). Preferably, the positive electrode active material may be inorganic sulfur.

Sulfur contained in the positive electrode active material is used in combination with a conductive material such as a carbon material because it does not have electrical conductivity alone. Accordingly, sulfur is comprised in the form of a sulfur-carbon composite, and preferably, the positive electrode active material may be a sulfur-carbon composite.

The carbon contained in the sulfur-carbon composite is a porous carbon material and provides a framework capable of uniformly and stably immobilizing sulfur and compensates for the low electrical conductivity of sulfur so that the electrochemical reaction can proceed smoothly.

The porous carbon material can generally be prepared by carbonizing various carbonaceous precursors. The porous carbon material may comprise uneven pores therein, the average diameter of the pores is in the range of 1 to 200 nm, and the porosity may range from 10 to 90% of the total volume of the porous carbon material. When the average diameter of the pores is less than the above range, the pore size is only at the molecular level and impregnation with sulfur is impossible. On the contrary, when the average diameter of the pores exceeds the above range, the mechanical strength of the porous carbon material is weakened, which is not preferable for application to the manufacturing process of the electrode.

The shape of the porous carbon material is in the form of sphere, rod, needle, plate, tube, or bulk, and can be used without limitation as long as it is commonly used in a lithium-sulfur battery.

The porous carbon material may have a porous structure or a high specific surface area, and may be any of those conventionally used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); and graphite such as natural graphite, artificial graphite and expanded graphite, and activated carbon. Preferably, the porous carbon material may be carbon nanotubes.

The sulfur-carbon composite may contain 60 to 90 parts by weight, preferably 65 to 85 parts by weight, more preferably 70 to 80 parts by weight of sulfur, based on 100 parts by weight of the sulfur-carbon composite. When the content of sulfur is less than the above-described range, as the content of the porous carbon material in the sulfur-carbon composite is relatively increased, the specific surface area is increased and thus when manufacturing the positive electrode, the content of the binder is increased. This increase in the amount of use of the binder eventually increases the sheet resistance of the positive electrode and acts as an insulator to prevent electron pass, thereby deteriorating the performance of the battery. On the contrary, when the content of sulfur exceeds the above-described range, sulfur, which cannot be combined with the porous carbon material, aggregates with each other, or is re-leached to the surface of the porous carbon material, and thus is difficult to receive electrons, and cannot participate in electrochemical reactions, thereby resulting in loss of battery capacity.

In addition, sulfur in the sulfur-carbon composite is located on at least one of the inner and outer surfaces of the aforementioned porous carbon material, and at this time, may exist in an area of less than 100%, preferably 1 to 95%, more preferably 60 to 90% of the entire inner and outer surface of the porous carbon material. When sulfur as described above is present on the inner and outer surfaces of the porous carbon material within the above range, the maximum effect may be exhibited in terms of an electron transfer area and wettability with an electrolyte. Specifically, since sulfur is thinly and evenly impregnated on the inner and outer surfaces of the porous carbon material in the above range, the electron transfer contact area can be increased during the charging/discharging process. When sulfur is located in an area of 100% of the entire inner and outer surface of the porous carbon material, the carbon material is completely covered with sulfur, so that it has poor wettability to the electrolyte and poor contact with the electrically conductive material included in the electrode, so that it cannot receive electrons and thus cannot participate in the electrochemical reaction.

The method for preparing the sulfur-carbon composite is not particularly limited in the present invention, and a method commonly used in the art may be used. As an example, a method of simply mixing sulfur and the porous carbon material and then heat-treating them to form a composite may be used.

The positive electrode active material may further comprise at least one additive selected from a transition metal element, a group IIIA element, a group IVA element, a sulfur compound of these elements, and an alloy of these elements and sulfur, in addition to the above-described components.

The transition metal element may comprise Sc, Ti, V, Cr, Mn, Fe, Co, Ni, Cu, Zn, Y, Zr, Nb, Mo, Tc, Ru, Rh, Pd, Os, Ir, Pt, Au, Hg and the like, and the group IIIA element may comprise Al, Ga, In, Tl and the like, and the group IVA element may comprise Ge, Sn, Pb, and the like.

The positive electrode active material may be contained in an amount of 40 to 95% by weight, preferably 50 to 90% by weight, more preferably 60 to 85% by weight, based on a total of 100% by weight of the positive electrode active material layer constituting the positive electrode. When the content of the positive electrode active material is less than the above range, it is difficult to sufficiently exhibit the electrochemical reaction of the positive electrode. On the contrary, when the content exceeds the above range, the content of the electrically conductive material and the binder to be described later is relatively insufficient, and thus there is a problem that the resistance of the positive electrode increases, and the physical properties of the positive electrode decrease.

The positive electrode active material layer may further selectively include a conductive material which allows electrons to move smoothly within the positive electrode (specifically, the positive electrode active material), and a binder for well attaching the positive electrode active material to the current collector.

The conductive material is a material that acts as a path, through which electrons are transferred from the current collector to the positive electrode active material, by electrically connecting the electrolyte and the positive electrode active material. The conductive material can be used without limitation as long as it has electrical conductivity.

For example, as the conductive material, graphite such as natural graphite or artificial graphite; carbon blacks such as Super-P, Denka black, acetylene black, Ketjen black, channel black, furnace black, lamp black, and thermal black; carbon derivatives such as carbon nanotubes and fullerenes; electrically conductive fibers such as carbon fibers and metal fibers; carbon fluoride; metal powders such as aluminum and nickel powder; or electrically conductive polymers such as polyaniline, polythiophene, polyacetylene, and polypyrrole may be used alone or in combination.

The conductive material may be contained in an amount of 0.01 to 30% by weight based on a total of 100% by weight of the positive electrode active material layer constituting the positive electrode. When the content of the electrically conductive material is less than the above range, it is difficult to transfer electrons between the positive electrode active material and the current collector, thereby reducing voltage and capacity. On the contrary, when the content exceeds the above range, the proportion of positive electrode active material is relatively reduced and thus the total energy (charge amount) of the battery can be reduced. Therefore, it is preferable that the content of the electrically conductive material is determined to be an appropriate content within the above-described range.

The binder maintains the positive electrode active material in the positive electrode current collector, and organically connects the positive electrode active materials to increase the bonding force between them, and any binder known in the art may be used.

For example, the binder may be any one selected from fluororesin-based binders comprising polyvinylidene fluoride (PVdF) or polytetrafluoroethylene (PTFE); rubber-based binders comprising styrene butadiene rubber (SBR), acrylonitrile-butadiene rubber, and styrene-isoprene rubber; cellulose-based binders comprising carboxymethylcellulose (CMC), starch, hydroxy propyl cellulose, and regenerated cellulose; polyalcohol-based binders; polyolefin-based binders comprising polyethylene and polypropylene; polyimide-based binders; polyester-based binders; and silane-based binders, or mixtures or copolymers of two or more thereof.

The content of the binder may be 0.5 to 30% by weight based on a total of 100% by weight of the positive electrode active material layer constituting the positive electrode. When the content of the binder is less than 0.5 % by weight, the physical properties of the positive electrode may be degraded and thus the positive electrode active material and conductive material may be detached. When the content exceeds the above range, the ratio of the positive electrode active material and the conductive material in the positive electrode may be relatively reduced, so that the capacity of the battery may be reduced. Therefore, it is preferable that the content of the binder is determined to be an appropriate content within the above-described range.

In the present invention, the method of manufacturing the positive electrode is not particularly limited, and may be a known method by a person skilled in the art or various modified methods thereof.

As an example, the positive electrode may be prepared by preparing a slurry composition for a positive electrode comprising the above-described components, and then applying it to at least one surface of the positive electrode current collector.

The slurry composition for a positive electrode comprises the positive electrode active material, an conductive material, and a binder as described above, and may further comprise a solvent other than the above.

As the solvent, one capable of uniformly dispersing a positive electrode active material, a conductive material, and a binder is used. Such a solvent is an aqueous solvent, and water is most preferred, and in this case, water may be distilled water or deionized water. However, it is not necessarily limited thereto, and if necessary, a lower alcohol that can be easily mixed with water may be used. Examples of the lower alcohol include methanol, ethanol, propanol, isopropanol, and butanol, and preferably, they may be used in combination with water.

The solvent may be contained at a level having a concentration that allows easy coating, and the specific content varies depending on the application method and apparatus.

The slurry composition for a positive electrode may additionally contain, if necessary, materials commonly used for the purpose of improving its function in the relevant technical field as necessary. For example, a viscosity modifier, a fluidizing agent, a filler, etc. are mentioned.

The method of applying the slurry composition for a positive electrode is not particularly limited in the present invention, and for example, methods such as a doctor blade method, a die casting method, a comma coating method, and a screen printing method can be used. In addition, after being molded on a separate substrate, the slurry for the positive electrode may be applied on the positive electrode current collector by a pressing or lamination method.

After the application, a drying process for removing the solvent may be performed. The drying process is performed at a temperature and time at a level capable of sufficiently removing the solvent, and the conditions may vary depending on the type of the solvent, and thus are not particularly limited in the present invention. Examples of the drying method may comprise a drying method by warm air, hot air, or low-humidity air, a vacuum drying method, and a drying method by irradiation with (far)-infrared radiation or electron beam. The drying rate is usually adjusted so that the solvent can be removed as quickly as possible within a speed range that does not cause cracks in the positive electrode active material layer due to the concentration of stress and does not delaminate the positive electrode active material layer from the positive electrode current collector.

Additionally, the density of the positive electrode active material in the positive electrode may be increased by pressing the current collector after drying. Methods, such as a mold press and a roll press, are mentioned as a press method.

The porosity of the positive electrode, specifically, the positive electrode active material layer prepared by the above-described composition and manufacturing method may be 50 to 80%, and preferably 60 to 75%. When the porosity of the positive electrode is less than 50%, since the degree of filling of the slurry composition for the positive electrode comprising a positive electrode active material, an electrically conductive material, and a binder becomes too high, there are problems that sufficient electrolyte to exhibit ion conduction and/or electrical conduction between positive electrode active materials cannot be maintained, and thus output characteristics or cycle characteristics of the battery may be deteriorated, the overvoltage and the reduction in discharging capacity become serious. On the contrary, when the porosity of the positive electrode exceeds 80% and has an excessively high porosity, there is a problem that the physical and electrical connection with the current collector is lowered and thus adhesion is lowered and the reaction becomes difficult, and there is a problem that the increased porosity is filled by the electrolyte and thus the energy density of the battery is lowered. Therefore, the porosity of the positive electrode is appropriately adjusted within the above range.

In addition, the loading amount of sulfur in the positive electrode according to the present invention, that is, the mass of sulfur per unit area of the positive electrode active material layer in the positive electrode may be 0.5 to 15 mg/cm², preferably 1 to 10 mg/cm².

The negative electrode is as described above.

The electrolyte includes lithium ions, and is intended to cause an electrochemical oxidation or reduction reaction in the positive electrode and the negative electrode through them.

The electrolyte may be a non-aqueous electrolyte solution or a solid electrolyte that does not react with lithium metal, but is preferably a non-aqueous electrolyte, and comprises an electrolyte salt and an organic solvent.

The electrolytic salt which is comprised in the non-aqueous electrolyte solution is lithium salt. The lithium salt can be used without limitation as long as it is commonly used in an electrolyte solution for a lithium secondary battery. For example, the lithium salt may be LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, LiN(SO₂F)₂, lithium chloroborane, lithium lower aliphatic carboxylate, tetra-phenyl lithium borate, lithium imide, etc.

The concentration of the lithium salt may be 0.2 to 2 M, specifically 0.4 to 2 M, more specifically 0.4 to 1.7 M depending on various factors such as the exact composition of the electrolyte solvent mixture, the solubility of the salt, the conductivity of the dissolved salt, the charging and discharging conditions of the battery, the operating temperature, and other factors known in the lithium battery field. When the concentration of the lithium salt is less than 0.2 M, the conductivity of the electrolyte may be lowered and thus the performance of the electrolyte may be deteriorated. When the concentration of the lithium salt is more than 2 M, the viscosity of the electrolyte may increase and thus the mobility of the lithium ion may be reduced.

As the organic solvent contained in the non-aqueous electrolyte solution, those conventionally used in an electrolyte solution for a lithium secondary battery may be used without limitation, and for example, ether, ester, amide, linear carbonate, cyclic carbonate, etc. may be used alone or in combination of two or more. Among them, representatively, ether-based compounds may be comprised.

The ether-based compound may comprise acyclic ethers and cyclic ethers.

For example, the acyclic ether may be, but is not limited to, at least one selected from the group consisting of dimethyl ether, diethyl ether, dipropyl ether, methylethyl ether, methylpropyl ether, ethylpropyl ether, dimethoxyethane, diethoxyethane, ethylene glycol ethylmethylether, diethylene glycol dimethyl ether, diethylene glycol diethyl ether, diethylene glycol methylethyl ether, triethylene glycol dimethyl ether, triethylene glycol diethyl ether, triethylene glycol methylethyl ether, tetraethylene glycol dimethyl ether, tetraethylene glycol diethyl ether, tetraethylene glycol methylethyl ether, polyethylene glycol dimethyl ether, polyethylene glycol diethyl ether, and polyethylene glycol methylethyl ether.

As an example, the cyclic ether may be, but is not limited to, at least one selected from the group consisting of 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, and isosorbide dimethyl ether.

Examples of the ester of the organic solvent may be, but is not limited to, any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone, and ε-caprolactone, and a mixture of two or more thereof.

Specific examples of the linear carbonate compound may representatively be, but is not limited to, any one selected from the group consisting of dimethyl carbonate (DMC), diethyl carbonate (DEC), dipropyl carbonate, ethylmethyl carbonate (EMC), methylpropyl carbonate, and ethylpropyl carbonate, or a mixture of two or more thereof.

In addition, specific examples of the cyclic carbonate compound may be any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and halides thereof, or a mixture of two or more thereof. Examples of such halides comprise, but are not limited to, fluoroethylene carbonate (FEC) and the like.

The electrolyte may further include a nitric acid or nitrous acid-based compound as an additive in addition to the electrolyte salt and the organic solvent described above. The nitric acid or nitrite-based compound has an effect of forming a stable film on a lithium metal electrode, which is a negative electrode, and improving charging/discharging efficiency.

The nitric acid or nitrous acid-based compound is not particularly limited in the present invention, but may be at least one selected from the group consisting of inorganic nitric acid or nitrous acid compounds such as lithium nitrate (LiNO₃), potassium nitrate (KNO₃), cesium nitrate (CsNO₃) , barium nitrate (Ba(NO₃)₂), ammonium nitrate (NH₄NO₃), lithium nitrite (LiNO₂), potassium nitrite (KNO₂), cesium nitrite (CsNO₂) and ammonium nitrite (NH₄NO₂); organic nitric acid or nitrous acid compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite, and octyl nitrite; organic nitro compounds such as nitromethane, nitropropane, nitrobutane, nitrobenzene, dinitrobenzene, nitropyridine, dinitropyridine, nitrotoluene, dinitrotoluene, and combinations thereof, and preferably, lithium nitrate is used.

The injection of the electrolyte may be performed at an appropriate stage of the manufacturing processes of the electrochemical device, depending on the manufacturing process and required properties of the final product. That is, the injection can be performed before assembling the electrochemical device or at the final stage of assembling the electrochemical device.

A separator may be additionally comprised between the positive electrode and the negative electrode.

The separator may be made of a porous non-conductive or insulating material that separates or insulates the positive electrode and the negative electrode from each other and enables transport of lithium ions between the positive electrode and the negative electrode. The separator may be used without special limitation as long as it is used as a separator in a conventional lithium-sulfur battery. The separator may be an independent member such as a film, or may comprise a coating layer added to the positive and/or negative electrodes.

It is preferable that the separator has excellent wettability to the electrolyte while having low resistance to ion migration of the electrolyte.

The separator may be made of a porous substrate, and the porous substrate may be used as long as it is a porous substrate commonly used for a lithium-sulfur battery, and porous polymer films may be used alone or by laminating them, and for example, a nonwoven fabric or a polyolefin-based porous membrane made of glass fibers, polyethylene terephthalate fibers, etc. having a high melting point may be used, but is not limited thereto.

The material of the porous substrate is not particularly limited in the present invention, and any material can be used as long as it is a porous substrate commonly used in an electrochemical device. For example, the porous substrate may comprise at least one material selected from the group consisting of polyolefin such as polyethylene and polypropylene, polyester such as polyethyleneterephthalate and polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, poly(p-phenylene benzobisoxazole), and polyarylate.

The thickness of the porous substrate is not particularly limited, but may be 1 to 100 *µ*m, preferably 5 to 50 *µ*m. Although the thickness range of the porous substrate is not particularly limited to the above-mentioned range, when the thickness is excessively thinner than the lower limit described above, mechanical properties are deteriorated and thus the separator may be easily damaged during use of the battery.

The average diameter and porosity of the pores present in the porous substrate are also not particularly limited, but may be 0.001 *µ*m to 50 *µ*m and 10 to 95%, respectively.

The lithium secondary battery according to the present invention can be manufactured by lamination, stacking, and folding processes of the separator and the electrodes, in addition to the usual winding process.

The shape of the lithium secondary battery is not particularly limited, and may be various shapes such as a cylindrical shape, a laminate shape, and a coin shape.

Also, the present invention provides a battery module comprising the lithium-sulfur battery described above as a unit battery.

The battery module may be used as a power source for medium to large-sized devices requiring high temperature stability, long cycle characteristics, high capacity characteristics, and the like.

Examples of such medium to large-sized devices may comprise, but are not limited to, a power tool powered and moved by an electric motor; an electric car including an electric vehicle (EV), a hybrid electric vehicle (HEV), a plug-in hybrid electric vehicle (PHEV), and the like; an electric two-wheeled vehicle including an electric bike (E-bike) and an electric scooter (E-scooter); an electric golf cart; a power storage system, etc.

### [Mode for Invention]

Hereinafter, preferred examples of the present invention will be described in order to facilitate understanding of the present invention. It will be apparent to those skilled in the art, however, that the following examples are only illustrative of the present invention and various changes and modifications can be made within the scope of the present invention, and such variations and modifications are within the scope of the appended claims.

### Example and Comparative Example

### [Example 1]

Lithium nitride (manufactured by Sigma-Aldrich Co.) was pulverized to prepare lithium nitride powder having an average particle diameter of 1 *µ*m.

After sprinkling the lithium nitride powder prepared above on a thin film of lithium metal having a thickness of 45 *µ*m, it was put between polyethylene terephthalate films, rolled with a hot roll press device at 100 °C, and then polyethylene terephthalate films were removed to manufacture a lithium metal negative electrode having a lithium nitride protective layer in the form of a powder bed of lithium nitride particles with a thickness of 5 um formed on the surface of lithium metal.

### [Example 2]

87.5% by weight of sulfur-carbon composite (S:C=75:25 (weight ratio)) as a positive electrode active material, 5.0% by weight of Denka Black as an electrically conductive material, 7.5% by weight of styrene butadiene rubber/carboxymethyl cellulose (SBR:CMC=70:30 (weight ratio)) as a binder were mixed to prepare a slurry composition for a positive electrode.

The prepared slurry composition for a positive electrode was applied on an aluminum current collector having a thickness of 20 *µ*m, dried at 100 °C for 12 hours, and pressed with a roll press (roll press) to prepare a positive electrode. At this time, the loading amount of the positive electrode active material was 5.6 mAh/cm² or less, and the porosity of the positive electrode was 68%.

The prepared positive electrode and the lithium metal negative electrode prepared in Example 1 were positioned to face each other, and a polyethylene separator having a thickness of 16 *µ*m and a porosity of 45% was interposed therebetween, and 70 *µ*ℓ of electrolyte was injected to manufacture a lithium-sulfur battery.

At this time, a mixed solution in which 1M lithium bis(trifluoromethanesulfonyl)imide (LiTFSI) and 1% by weight of lithium nitrate (LiNO₃) were dissolved in an organic solvent which consists of 1,3-dioxolane and 1,2-dimethoxyethane (DOL:DME=1:1 (volume ratio)) was used as an electrolyte.

### [Comparative Example 1]

A lithium metal negative electrode was prepared as a thin film of lithium metal having a thickness of 45 um without forming a lithium nitride protective layer.

### [Comparative Example 2]

A lithium-sulfur battery was manufactured in the same manner as in Example 2, except that the lithium metal negative electrode of Comparative Example 1 was used instead of the lithium metal negative electrode of Example 1.

### [Comparative Example 3]

A thin film of lithium metal having a thickness of 45 um was prepared.

A coating composition was prepared by mixing 90% by weight of lithium nitride (manufactured by Sigma-Aldrich Co.) and 10% by weight of polyvinylidene fluoride (PVDF) in tetrahydrofuran (THF).

The coating composition was applied on the thin film of lithium metal and then vacuum-dried at 70 °C for 2 hours to prepare a lithium metal negative electrode coated with a lithium nitride protective layer to a thickness of 5 *µ*m on the surface of the lithium metal.

### [Comparative Example 4]

A lithium-sulfur battery was manufactured in the same manner as in Example 2, except that the lithium metal negative electrode of Comparative Example 3 was used instead of the lithium metal negative electrode of Example 1.

### Experimental Example 1: Evaluation of surface of lithium metal negative electrode

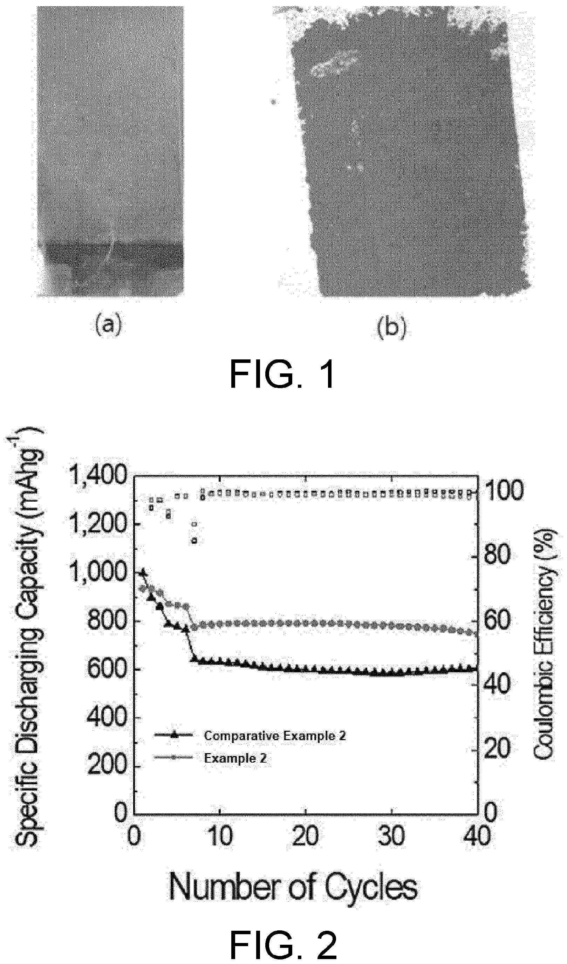

The surfaces of the lithium metal negative electrodes prepared in Example 1 and Comparative Example 1 were visually evaluated. The results obtained at this time were shown in FIG. 1.

Referring to FIG. 1, since lithium nitride powder can be observed in the lithium metal negative electrode (b) according to Example 1 compared to Comparative Example 1 (a), it can be seen that the lithium metal negative electrode (b) according to Example 1 comprises a lithium nitride protective layer comprising lithium nitride powder.

### Experimental Example 2: Evaluation of battery performance

For the batteries produced in Example 2, Comparative Example 2, and Comparative Example 4, performance was evaluated using a charging/discharging measuring device (LAND CT-2001A, manufactured by Wuhan company).

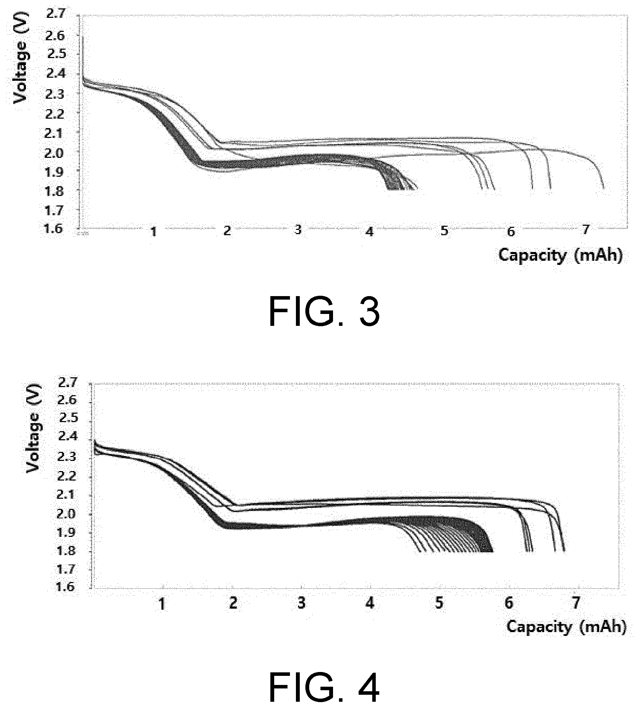

Specifically, after setting the discharge current rate to 0.5C at 25 °C, charging/discharging was repeated 50 cycles to measure capacity and lifetime characteristics. The results obtained at this time were shown in Table 1 and FIGS. 2 to 4.

**Table 1:**

| | Discharging capacity per unit weight of positive electrode active material (mAh/g_{sulfur}@30^{th}) |
|---|---|
| Example 2 | 781 |
| Comparative Example 2 | 586 |
| Comparative Example 4 | 213 |

As shown in FIGs. 2 to 4 and Table 1, it can be seen that in the case of the battery according to the Examples, the overall performance is superior to that of the Comparative Examples.

Specifically, referring to Table 1, it can be seen that in the case of the battery of Example 2 using a lithium metal negative electrode containing a lithium nitride protective layer, the difference in discharging capacity at the 30^{th} cycle from Comparative Example 2 using a conventional lithium metal negative electrode without a lithium nitride protective layer was 195 mAh/g_{sulfur} and it shows about 33% higher capacity characteristics as compared to Comparative Example 2. In addition, it can be seen that when a binder is comprised in the lithium nitride protective layer, a decrease in capacity occurs due to overvoltage.

In addition, it can be seen from FIGs. 2 to 4 that the battery of Example 2 has a higher capacity than the battery of Comparative Example 2 and at the same time, has excellent capacity retention during the charging/discharging cycle.

From these results, it can be seen that the lithium-sulfur battery of the present invention can improve capacity and lifetime characteristics of a lithium-sulfur battery by including a lithium metal electrode comprising a lithium nitride protective layer in the form of a powder bed of lithium nitride particles.

## Claims

1. A method of manufacturing a lithium metal negative electrode, comprising the steps of
(a) applying lithium nitride powder on at least one surface of a lithium metal layer; and
(b) rolling the applied powder to form a lithium nitride protective layer in the form of a powder bed of lithium nitride particles on the at least one surface of the lithium metal layer.

2. The method according to claim 1, wherein the lithium nitride powder has an average particle diameter (D₅₀) of 0.1 to 100 µm.

3. The method according to claim 1, wherein the applying step is performed by sprinkling.

4. The method according to claim 1, wherein the rolling step is performed by placing the lithium metal layer coated with lithium nitride powder between rolling plates, applying heat or pressure during rolling, and removing the rolling plates.

5. The method according to claim 4, wherein the rolling plates are a polymer film or a metal plate.

6. The method according to claim 1, wherein the rolling step is performed at a temperature of 25 °C to 120 °C.

7. The method according to claim 1, wherein the rolling step is performed at a pressurizing force of 0.1 to 980 kN.

8. The method according to claim 1, wherein the lithium metal layer is a thin film of lithium metal, and wherein the lithium metal negative electrode is suitable for use in a lithium-sulfur battery.

9. A lithium metal negative electrode obtainable by the method of any of claims 1-8 and comprising
a lithium metal layer, and
a lithium nitride protective layer in the form of a powder bed of lithium nitride particles fixed without a binder by rolling lithium nitride powder on at least one surface of the lithium metal layer.

10. The lithium metal negative electrode according to claim 9, wherein the lithium metal layer is a thin film of lithium metal, and wherein the lithium metal negative electrode is suitable for use in a lithium-sulfur battery.

11. The lithium metal negative electrode according to claim 9, wherein the lithium nitride protective layer has a thickness of 0.1 to 100 µm.

12. The lithium metal negative electrode according to claim 9, which has a surface resistance of 10 to 500 Ω.

13. The lithium metal negative electrode according to claim 9, wherein the lithium nitride protective layer has a lithium ion conductivity of 0.0001 to 0.005 S/cm.

14. A lithium-sulfur battery comprising
a positive electrode comprising a positive electrode active material;
the lithium metal negative electrode according to claim 9; and
an electrolyte between the positive electrode and the lithium metal negative electrode.

15. The lithium-sulfur battery according to claim 14, wherein the positive electrode active material comprises at least one of inorganic sulfur, Li₂Sₙ wherein n ≥ 1, a disulfide compound, an organic sulfur compound, and a carbon-sulfur polymer (C₂Sₓ)ₙ wherein x = 2.5 to 50 and n ≥ 2.

## Patentansprüche

1. Verfahren zur Herstellung einer negativen Lithiummetallelektrode, umfassend die folgenden Schritte:
(a) Aufbringen von Lithiumnitridpulver auf mindestens eine Oberfläche einer Lithiummetallschicht; und
(b) Walzen des aufgebrachten Pulvers zur Bildung einer Lithiumnitrid-Schutzschicht in Form eines Pulverbettes aus Lithiumnitridteilchen auf der mindestens einen Oberfläche der Lithiummetallschicht.

2. Verfahren gemäß Anspruch 1, bei dem das Lithiumnitridpulver einen durchschnittlichen Teilchendurchmesser (D₅₀) von 0,1 bis 100 µm aufweist.

3. Verfahren gemäß Anspruch 1, bei dem der Aufbringungsschritt durch Bestreuen durchgeführt wird.

4. Verfahren gemäß Anspruch 1, bei dem der Walzschritt dadurch erfolgt, dass die mit Lithiumnitridpulver beschichtete Lithiummetallschicht zwischen Walzplatten angeordnet wird, während des Walzens Wärme oder Druck angewendet wird und die Walzplatten entfernt werden.

5. Verfahren gemäß Anspruch 4, bei dem die Walzplatten ein Polymerfilm oder eine Metallplatte sind.

6. Verfahren gemäß Anspruch 1, bei dem der Walzschritt bei einer Temperatur von 25 °C bis 120 °C durchgeführt wird.

7. Verfahren gemäß Anspruch 1, bei dem der Walzschritt mit einer Druckkraft von 0,1 bis 980 kN durchgeführt wird.

8. Verfahren gemäß Anspruch 1, bei dem die Lithiummetalschicht ein dünner Film aus Lithiummetall ist, und wobei die negative Lithiummetallelektrode zur Verwendung in einer Lithium-Schwefel-Batterie geeignet ist.

9. Negative Lithiummetallelektrode erhältlich durch das Verfahren nach mindestens einem der Ansprüche 1-8 und umfassend
eine Lithiummetallschicht, und
eine Lithiumnitrid-Schutzschicht in Form eines Pulverbettes aus Lithiumnitrid-Teilchen, die ohne Bindemittel durch Walzen von Lithiumnitrid-Pulver auf mindestens einer Oberfläche der Lithiummetallschicht fixiert ist.

10. Negative Lithiummetallelektrode gemäß Anspruch 9, wobei die Lithiummetallschicht ein dünner Film aus Lithiummetall ist, und wobei die negative Lithiummetallelektrode zur Verwendung in einer Lithium-Schwefel-Batterie geeignet ist.

11. Negative Lithiummetallelektrode gemäß Anspruch 9, wobei die Lithiumnitrid-Schutzschicht eine Dicke von 0,1 bis 100 µm aufweist.

12. Negative Lithiummetallelektrode gemäß Anspruch 9, die einen Oberflächenwiderstand von 10 bis 500 Ω aufweist.

13. Negative Lithiummetallelektrode gemäß Anspruch 9, wobei die Lithiumnitrid-Schutzschicht eine Lithiumionenleitfähigkeit von 0,0001 bis 0,005 S/cm aufweist.

14. Lithium-Schwefel-Batterie, umfassend
eine positive Elektrode, die ein Positivelektrodenaktivmaterial umfasst;
die negative Lithiummetallelektrode gemäß Anspruch 9; und
einen Elektrolyten zwischen der positiven Elektrode und der negativen Lithiummetallelektrode.

15. Lithium-Schwefel-Batterie gemäß Anspruch 14, wobei das Positivelektrodenaktivmaterial mindestens eines aus anorganischem Schwefel, Li₂Sₙ, worin n ≥ 1 ist, einer Disulfidverbindung, einer organischen Schwefelverbindung und einem Kohlenstoff-Schwefel-Polymer (C₂Sₓ)ₙ, worin x = 2,5 bis 50 und n ≥ 2 ist, umfasst.

## Revendications

1. Procédé de fabrication d'une électrode négative métallique au lithium, comprenant les étapes de
(a) application de poudre de nitrure de lithium sur au moins une surface d'une couche de métal de lithium ; et
(b) laminage de la poudre appliquée pour former une couche protectrice de nitrure de lithium sous la forme d'un lit de poudre de particules de nitrure de lithium sur la au moins une surface de la couche de métal de lithium.

2. Procédé selon la revendication 1, dans lequel la poudre de nitrure lithium a un diamètre de particules moyen (D₅₀) de 0,1 à 100 µm.

3. Procédé selon la revendication 1, dans lequel l'étape d'application est réalisée par aspersion.

4. Procédé selon la revendication 1, dans lequel l'étape de laminage est réalisée par placement de la couche de métal de lithium revêtue de poudre de nitrure de lithium entre des plaques de laminage, application de chaleur ou de pression durant le laminage, et retrait des plaques de laminage.

5. Procédé selon la revendication 4, dans lequel les plaques de laminage sont un film polymère ou une plaque de métal.

6. Procédé selon la revendication 1, dans lequel l'étape de laminage est mise en oeuvre à une température de 25 °C à 120 °C.

7. Procédé selon la revendication 1, dans lequel l'étape de laminage est mise en oeuvre à une force de pression de 0,1 à 980 kN.

8. Procédé selon la revendication 1, dans lequel la couche de métal de lithium est un film fin de métal de lithium, et dans lequel l'électrode négative métallique au lithium est adaptée pour une utilisation dans une batterie au lithium-soufre.

9. Électrode négative métallique au lithium pouvant être obtenue par le procédé selon l'une quelconque des revendications 1 à 8 et comprenant
une couche de métal de lithium, et
une couche protectrice de nitrure de lithium sous la forme d'un lit de poudre de particules de nitrure de lithium fixé sans liant par laminage de poudre de nitrure de lithium sur au moins une surface de la couche de métal de lithium.

10. Électrode négative métallique au lithium selon la revendication 9, dans laquelle la couche de métal de lithium est un film fin de métal de lithium, et dans laquelle l'électrode négative métallique au lithium est adaptée pour une utilisation dans une batterie au lithium-soufre.

11. Électrode négative métallique au lithium selon la revendication 9, dans laquelle la couche protectrice de nitrure de lithium présente une épaisseur de 0,1 à 100 µm.

12. Électrode négative métallique au lithium selon la revendication 9, qui présente une résistance de surface de 10 à 500 Ω.

13. Électrode négative métallique au lithium selon la revendication 9, dans laquelle la couche protectrice de nitrure de lithium présente une conductivité des ions lithium de 0,0001 à 0,005 S/cm.

14. Batterie au lithium-soufre comprenant
une électrode positive comprenant un matériau actif d'électrode positive ; l'électrode négative métallique au lithium selon la revendication 9 ; et
un électrolyte entre l'électrode positive et l'électrode négative métallique au lithium.

15. Batterie au lithium-soufre selon la revendication 14, dans laquelle le matériau actif d'électrode positif comprend au moins l'un de soufre inorganique, de Li₂Sₙ avec n ≥ 1, d'un composé disulfure, d'un composé de soufre organique, et d'un polymère carbone-soufre (C₂Sₓ)ₙ avec x = 2,5 à 50 et n >_ 2.
